# EUROPÄISCHE PATENTSCHRIFT

(11) **EP 0 357 560 B1**
(45) Veröffentlichungstag und Bekanntmachung des Hinweises auf die Patenterteilung: **26.07.1995**
(21) Anmeldenummer: 89810633.1
(22) Anmeldetag: 24.08.1989
(51) Int. Cl.: C09B 43/16, C09B 35/039, D06P 1/39, C09B 67/24

(54) **Anionische Triazinylamino-Disazofarbstoffe**
Anionic triazinylamino-disazo dyes
Colorants anioniques triazinylamino disazoiques

(30) Priorität: 26.08.1988 DE 3828909
(43) Veröffentlichungstag der Anmeldung: 07.03.1990
(73) Patentinhaber: SANDOZ AG, 4002 Basel (CH); SANDOZ-PATENT-GMBH, 79539 Lörrach (DE)
(72) Erfinder: Pedrazzi, Reinhard, CH-4123 Allschwil (CH)

(56) Entgegenhaltungen:
- EP-A- 0 017 831
- BE-A- 703 224
- DE-A- 3 517 891
- FR-A- 1 441 174
- GB-A- 1 525 280

## Beschreibung

Die Erfindung betrifft anionische Disazoverbindungen, die eine Triazinylaminobrücke enthalten, und ihre Salze, Verfahren zur Herstellung, ihren Einsatz in Färbe- und Druckverfahren als Direktfarbstoffe sowie Färbepräparationen davon.

GB 1 525 280 (1) hat durch einen amino-substituierten Triazinring überbrückte Disazoverbindungen zum Gegenstand, in welchen die Monoazobausteine aus sulfogruppenhaltiger naphthalinischer Diazokomponente und gegebenenfalls substituierter anilinischer Kupplungskomponente bestehen. Dabei liegt das Schwergewicht auf bezüglich der Monoazochromophore symmetrischen Verbindungen, denn die eingesetzten Monoazoverbindungen sind bevorzugt identisch und insbesondere wird als Kupplungskomponente unsubstituiertes Anilin verwendet.
EP-A-0 017 831 (2) hat Disazo- wie auch Tetrakisazoverbindungen mit Triazinbrücken zum Gegenstand, deren Monoazobausteine aus sulfogruppenhaltiger naphthalinischer Diazokomponente und gegebenenfalls substituierter Anilin-Kupplungskomponente bestehen. Alle offenbarten Verbindungen sind aus jeweils identischen Monoazoverbindungen aufgebaut. Der Triazinring ist aminosubstituiert; ein Aminosubstituent davon kann einen divalenten Rest darstellen und dient dann zur Verdoppelung des Disazoteils.
Die Verbindungen aus (1) und (2) sind Direktfarbstoffe und werden zum Färben von Papier verwendet.

Demgegenüber betrifft die vorliegende Erfindung Disazoverbindungen, in welchen durch Kupplung zweier identischer Disulfonaphthalin-Diazokomponenten mit zwei verschiedenen Kupplungskomponenten erhaltene Monoazoverbindungen über eine Triazinylaminobrücke miteinander verknüpft sind.

Diese Verbindungen entsprechen der Formel I, 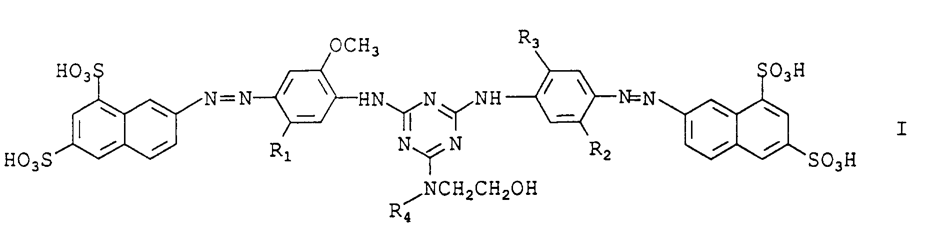
worin
- R₁ und R₂: unabhängig voneinander für Wasserstoff oder Methyl und
- R₃: für Wasserstoff, Methyl oder Methoxy stehen,
mit der Einschränkung, dass R₁ und R₂ voneinander verschieden sind, wenn R₃ für Methoxy steht, und
- R₄: Wasserstoff oder 2-Hydroxyäthyl bedeutet,
und deren Salze.

Die Verbindungen der Formel I können als freie Säure, als Salz von Alkalimetallen wie Lithium, Natrium oder Kalium, oder als unsubstituiertes oder substituiertes Ammoniumsalz vorliegen, wobei insbesondere auch gemischte Salze möglich sind. In Salzen enthaltend als Kation substituiertes Ammonium, kann sich dieses von einem primären, sekundären oder tertiären Amin ableiten, beispielsweise sind die folgenden Amine geeignet: Mono-, Di- oder Trimethyl-, -äthyl-, -propyl- oder -butyl-amin; Mono-, Di- oder Tri-äthanol-, -propanol- oder -isopropanol-amin; N-Methyl-N-hydroxyäthylamin, N-Methyl-N,N-di(hydroxyäthyl)amin, N-Aethyl-N-hydroxyäthoxyäthylamin, Morpholin, Piperidin, Piperazin, N-Hydroxyäthylmorpholin, N-Hydroxyäthylpiperazin, N-Aminoäthylpiperazin; Aethylendiamin, Hexamethylendiamin; Dimethylaminopropylamin, Diäthylaminopropylamin, Diäthylenglykolamin, Diglykolamin und 3-Methoxypropylamin.
Als Amine sind auch Polyglykolamine geeignet, die beispielsweise durch Umsetzung von Ammoniak, Alkyl- oder Hydroxyalkylamin mit Alkylenoxiden erhalten werden können.
Als substituiertes Ammoniumion kann auch ein quaternäres Ammoniumion vorliegen, das sich von Ammoniumverbindungen ableitet, die bevorzugt ein oder zwei quaternäre Ammoniumionen enthalten; beispielsweise sind zu nennen: Tetramethyl-, Tetraäthyl-, Trimethyläthyl-, Dimethyl-di(2-hydroxypropyl)-, Trimethylhydroxyäthyl-, Tetrahydroxyäthyl- und Trimethylbenzyl-ammoniumhydroxid.

Die Verbindungen der Formel I werden hergestellt, indem man eine Verbindung der Formel II, 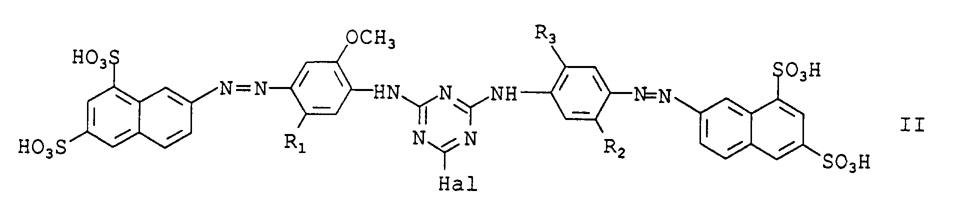
worin R₁, R₂ und R₃ wie oben definiert sind und Hal für Halogen steht, mit dem Amin der Formel III 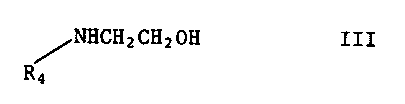
worin R₄ Wasserstoff oder 2-Hydroxyäthyl bedeutet, umsetzt.

Diese Kondensation wird nach an sich bekannten Methoden durchgeführt und erfolgt unter den für den Austausch des dritten Halogenatoms am Triazinring üblichen Bedingungen.

Die als Ausgangsmaterial eingesetzten Verbindungen der Formel II können erhalten werden, indem man ausgehend von Cyanurhalogenid schrittweise über ein entsprechendes Monokondensat mit den jeweiligen Monoazoverbindungen umsetzt.

Auch die Kondensationsbedingungen beim Ersatz des ersten und zweiten Halogenatoms am Triazin sind die üblicherweise verwendeten.

Sowohl die dabei verwendeten Monoazoverbindungen als auch die Amine der Formel III stellen an sich bekannte Verbindungen dar oder können analog zu an sich bekannten Verfahren erhalten werden.

Eine gemäss obigem Herstellungsverfahren resultierende Verbindung der Formel I kann in Form der erhaltenen Lösung an sich verwendet werden; die Lösung kann aber auch durch Sprühtrocknung in den Feststoff übergeführt werden. Weiterhin ist auch die für Farbstoffe übliche Isolierungsmethode, Aussalzen aus der Lösung, Abfiltrieren und Trocknen geeignet.

Die Art der in einer Verbindung der Formel I den Sulfogruppen zugeordneten Kationen kann verfahrensmässig in verschiedener Weise beeinflusst werden; es handelt sich dabei um durchwegs an sich bekannte Methoden. Insbesondere können durch gezielte Steuerung des angewandten Verfahrens gemischte Salze erhalten werden.

Die erfindungsgemässen Verbindungen in Form ihrer wasserlöslichen Salze finden Verwendung zum Färben oder Bedrucken von hydroxygruppen- oder stickstoffhaltigen organischen Substraten. Sie dienen beispielsweise zum Färben oder Bedrucken von Fasern, Fäden oder daraus hergestellten Textilien, die aus natürlichen oder synthetischen Polyamiden oder aus natürlichem oder regeneriertem Cellulosematerial, z.B. Baumwolle, bestehen oder diese enthalten, nach an sich bekannten Methoden; Baumwolle wird dabei vorzugsweise nach dem Ausziehverfahren gefärbt, beispielsweise aus langer oder kurzer Flotte und bei Raum- bis Kochtemperatur. Das Bedrucken erfolgt durch Imprägnieren mit einer Druckpaste, welche nach an sich bekannter Methode zusammengestellt wird.
Die neuen Farbstoffe können weiter auch zum Färben oder Bedrucken von Leder, vorzugsweise von chromgegerbten Lederarten, nach an sich bekannten Methoden verwendet werden. Ausserdem können die Farbstoffe bei der Herstellung von Tinten nach an sich bekannter Methode eingesetzt werden.

Insbesondere eignen sich die Verbindungen der Formel I jedoch zum Färben oder Bedrucken von Papier, z.B. für die Herstellung von in der Masse gefärbtem, geleimtem oder ungeleimtem Papier. Sie können aber auch zum Färben von Papier nach dem Tauchverfahren oder in der Leimpresse verwendet werden. Das Färben und Bedrucken von Papier erfolgt nach bekannten Methoden. Die jeweils erhaltenen Färbungen und Drucke (insbesondere die auf Papier) zeigen gute Gebrauchsechtheiten.

Die Verbindungen der Formel I können auch in Form von Färbepräparaten eingesetzt werden. Diese Anwendungsform ist insbesondere beim Färben von Papier bevorzugt. Die Verarbeitung in stabile flüssige, vorzugsweise wässrige, konzentrierte Färbepräparate kann auf allgemein bekannte Weise erfolgen, vorteilhaft durch Lösen in geeigneten Lösungsmitteln, gegebenenfalls unter Zugabe eines Hilfsmittels, z.B. einer hydrotropen Verbindung oder eines Stabilisators. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffes.

Geeignete hydrotrope Hilfsmittel sind beispielsweise niedermolekulare Amide, Laktone, Alkohole, Glykole oder Polyole, niedermolekulare Aether oder Oxalkylierungsprodukte sowie Nitrile oder Ester; in Betracht kommen dabei bevorzugt Methanol, Aethanol, Propanol; Aethylen-, Propylen-, Diäthylen-, Thiodiäthylen- und Dipropylen-glykol; Butandiol; β-Hydroxypropionitril, Pentamethylenglykol, Aethylenglykolmonoäthyl- und -propyläther, Aethylendiglykolmonoäthyläther, Triäthylenglykolmonobutyläther, Butylpolyglykol, Formamid, Dimethylformamid, Pyrrolidon, N-Methylpyrrolidon, Glykolacetat, Butyrolakton, Harnstoff und ε-Caprolactam.

Hydrotrope Verbindungen sind z.B. beschrieben bei H. Rath und S. Müller, Melliand Textilberichte 40, 787 (1959) oder bei E.H. Daruwalla in K. Venkataraman, The Chemistry of Synthetic Dyes, Vol. VIII, S. 86-92 (1974).
Durch den zusätzlichen Gehalt an einer hydrotropen Verbindung lassen sich die Lagerstabilität der Farbstoffzubereitung bzw. die Löslichkeit des eingesetzten Farbstoffes weiter verbessern.

Eine günstige Zusammensetzung solcher flüssigen Präparate ist beispielsweise die folgende (Teile bedeuten Gewichtsteile):
100 Teile einer Verbindung der Formel I als wasserlösliches Salz,
1-100, vorzugsweise 1-10, Teile eines anorganischen Salzes,
100-800 Teile Wasser,
0-500 Teile einer der oben angeführten hydrotropen Verbindungen.

Die flüssigen Präparationen können in Abhängigkeit von der Salzform als Suspension oder auch vorzugsweise als echte Lösungen vorliegen. Die Zubereitungen sind stabil und können über längere Zeit gelagert werden.

Ebenso können die Verbindungen der Formel I auf an sich bekannte Weise zu festen, bevorzugt granulierten Färbepräparaten verarbeitet werden, vorteilhaft durch Granulieren wie in der französischen Patentschrift Nr.1.581.900 beschrieben.
Eine günstige Zusammensetzung für feste Präparate ist beispielsweise die folgende (Teile bedeuten Gewichtsteile):
100 Teile einer Verbindung der Formel I als wasserlösliches Salz,
1-100, vorzugsweise 1-10, Teile eines anorganischen Salzes,
0-800 Teile eines Stellmittels (vorzugsweise nichtionogen wie Stärke, Dextrin, Zucker, Traubenzucker oder Harnstoff).
In der festen Präparation kann noch bis zu 10% an Restfeuchtigkeit vorhanden sein.

Die Verbindungen der Formel I besitzen je nach den Sulfogruppen zugeordnetem Kation oder Kationgemisch gute Löslichkeitseigenschaften und zeichnen sich dann insbesondere durch gute Kaltwasserlöslichkeit aus. Weiter färben sie die Abwässer bei der Herstellung von geleimtem wie auch ungeleimtem Papier praktisch gar nicht oder nur geringfügig an. Sie melieren auf Papier nicht, sind weitgehend unempfindlich gegen Füllstoff und pH-Schwankungen und neigen nur wenig zur farbigen Papierzweiseitigkeit; weder im alkalischen noch im sauren Bereich ist ein Farbstärkeverlust oder Farbumschlag zu beobachten.
Die Färbungen auf Papier zeigen gute Lichtechtheit, nach längerem Belichten ändert sich die Nuance Ton-in-Ton. Die gefärbten Papiere sind sehr gut nassecht gegen Wasser, Milch, Fruchtsäfte, gesüsste Mineralwasser und Tonicwasser, und besitzen zudem gute Alkoholechtheit. Die Farbstoffe haben hohe Substantivität, d.h. sie ziehen praktisch quantitativ auf und zeigen dabei ein gutes Aufbauvermögen; sie können der Papiermasse direkt, d.h. ohne vorheriges Auflösen, als Trockenpulver oder Granulat zugesetzt werden, ohne dass eine Minderung in der Brillanz oder Verminderung in der Farbausbeute eintritt. Vorteilhaft werden jedoch solche echten Lösungen der Farbstoffe wie oben angeführt eingesetzt, die stabil, von niederer Viskosität und dadurch sehr gut dosierbar sind.
Die gefärbten Papiere sind sowohl oxidativ als auch reduktiv perfekt bleichbar, was für die Wiederverwendung von Ausschuss- und Altpapier von Wichtigkeit ist.
Die Herstellung der Papierfärbungen kann mit den beschriebenen Farbstoffen auch in Weichwasser erfolgen. Zudem können Faserstoffe, die Holzschliff enthalten in guter Qualität gefärbt werden.

Die nachfolgenden Beispiele dienen zur Illustration der Erfindung. Sofern nichts anderes angegeben ist, bedeuten in den Beispielen Teile Gewichtsteile und Prozente Gewichtsprozente; die Temperaturen sind in Celsius-graden angegeben.

### Beispiel 1

91 Teile 2-Aminonaphthalin-6,8-disulfonsäure werden in 400 Teilen Wasser gelöst und mit 48 Teilen 30%iger Salzsäure versetzt. Man tropft eine Lösung aus 21 Teilen Natriumnitrit in 50 Teilen Wasser zu und hält die Temperatur bei 18-20°. Nach beendeter Diazotierung wird ein allfälliger Nitritüberschuss mit 2 Teilen Sulfaminsäure zerstört. Zu der Diazosuspension wird eine Lösung aus 41 Teilen 1-Amino-2-methoxy-5-methylbenzol in 150 Teilen Wasser und 44 Teilen 30%iger Salzsäure gegeben. Anschliessend tropft man 100 Teile 30%ige Natronlauge so zu, dass sich der pH bei 7,5-8 einstellt. Nach etwa einer Stunde ist die Kupplung beendet. Die erhaltene braune Farbstoffsuspension wird auf 40° erwärmt, wodurch sich praktisch eine Lösung bildet.
58 Teile Cyanurchlorid werden in 100 Teilen Wasser und 300 Teilen Eis gut verrührt. Man lässt die oben hergestellte 40° warme Farbstofflösung zulaufen und hält die Temperatur während der Kondensation bei 18-20°. Gleichzeitig wird der pH durch Zutropfen von 110 Teilen 20%iger Sodalösung bei 6 gehalten. Anschliessend lässt man drei Stunden nachrühren, wonach die Monokondensation beendet ist.
131 Teile des zweiten Aminomonoazofarbstoffs, hergestellt durch Diazotierung von 2-Aminonaphthalin-6,8-disulfonsäure und Kupplung auf o-Anisidin-ω-methansulfonsäure mit anschliessender Verseifung, werden in 400 Teilen Wasser bei 60° gelöst und zur Suspension des Cyanurchlorid-Monokondensats getropft. Man hält den pH bei 6,5 und erwärmt kontinuierlich auf 70°. Nach etwa 2 Stunden bei 70° verändert sich der pH nicht mehr, die zweite Kondensation ist beendet.
Diesem Reaktionsgemisch werden 85 Teile Diäthanolamin zugesetzt. Die Temperatur wird dann weiter bis auf 95° gesteigert. Nach vier Stunden bei 95° ist die dritte Kondensation beendet. Man streut 600 Teile Kochsalz ein und lässt bis auf 60° kaltrühren. Der Farbstoff fällt in gut filtrierbarer Form aus, er entspricht (in Form der freien Säure) der Formel 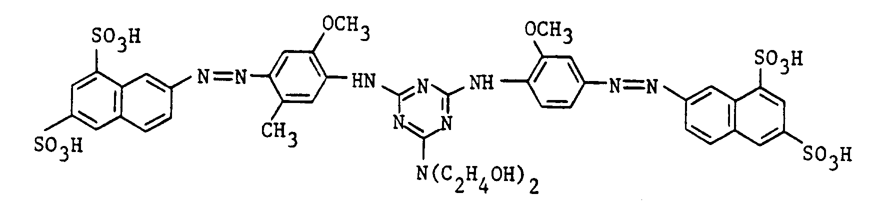
Nach dem Absaugen und Trocknen bei 80° erhält man 420 Teile salzhaltigen Farbstoff (71%ig). Der Farbstoff löst sich gut in kaltem Wasser und färbt Papiermasse in brillanten, rotstichig gelben Tönen, wobei im alkalischen wie auch im sauren Bereich kein Farbstärkeverlust oder Farbumschlag zu beobachten ist.
Licht- und Nassechtheiten der resultierenden Papierfärbungen sind gut.

### Beispiele 2-10

Analog der in Beispiel 1 gezeigten Methode können weitere Verbindungen der Formel I unter Verwendung entsprechender Ausgangsverbindungen hergestellt werden, für welche in der folgenden Tabelle die Symbole angeführt sind. In der letzten Kolonne I ist der Farbton der erhaltenen Papierfärbung angegeben, es bedeutet:
- a: = grünstichig gelb
- b: = neutralgelb
- c: = rotstichig gelb.

Die Herstellung der gefärbten Papiere mit diesen Farbstoffen ist weitgehend unabhängig vom pH-Bereich, was Farbstärkeverlust oder Farbumschlag anbelangt. Die Färbungen zeigen zudem gute Licht- und Nassechtheiten.

**Tabelle**

| Bsp. Nr. | R₁ | R₂ | R₃ | R₄ | I |
|---|---|---|---|---|---|
| 2 | CH₃ | H | OCH₃ | H | c |
| 3 | do. | H | H | H | c |
| 4 | do. | H | H | -CH₂CH₂OH | c |
| 5 | do. | CH₃ | CH₃ | do. | c |
| 6 | do. | do. | do. | H | c |
| 7 | H | H | H | H | a |
| 8 | H | H | H | -CH₂CH₂OH | a |
| 9 | H | CH₃ | CH₃ | do. | b |
| 10 | H | do. | do. | H | b |

### Beispiel 11

300 Teile des gemäss Beispiel 1 hergestellten Farbstoffs werden als feuchter Presskuchen in 1400 Teilen Wasser angerührt und mit 375 Teilen Harnstoff versetzt. Durch Erwärmen auf 40° entsteht eine Lösung. Diese Lösung ist für längere Zeit lagerungsstabil, d.h. sie zeigt weder in der Kälte noch in der Wärme Ausfällungen.

### Beispiel 12

Wird der Farbstoff aus Beispiel 1 anstelle der Behandlung mit Kochsalz mit Salzsäure stark sauer gestellt, so fällt er in Form der freien Säure aus. Den erhaltenen Presskuchen löst man in 1000 Teilen Wasser und 500 Teilen Diäthanolamin. Es wird eine gebrauchsfertige stabile Lösung des Farbstoffs aus Beispiel 1 in Form des Diäthanolaminsalzes gebildet.

### Beispiel 13

Verwendet man anstelle von Diäthanolamin in Beispiel 12 100 Teile Lithium-Monohydrat, so erhält man ebenfalls eine stabile konzentrierte Lösung des Farbstoffs als Lithiumsalz.

Analog der in den Beispielen 11-13 beschriebenen Methode können auch die Farbstoffe der Beispiele 2-10 in flüssig-wässrige Färbepräparate mit hoher Lagerbeständigkeit übergeführt werden.

Applikationsmöglichkeiten der erfindungsgemässen Verbindungen sowie flüssig-wässrigen Färbepräparaten davon werden in den folgenden Vorschriften illustriert.

### Anwendungsvorschrift A

In einem Holländer werden 70 Teile chemisch gebleichte Sulfitcellulose aus Nadelholz und 30 Teile chemisch gebleichte Sulfitcellulose aus Birkenholz in 2000 Teilen Wasser gemahlen. Zu dieser Masse streut man 0,2 Teile des Farbstoffes aus Beispiel 1 oder gibt 1,0 Teile des flüssigen Farbstoffpräparates gemäss Beispiel 11 oder 12 zu. Nach 20 Minuten Mischzeit wird daraus Papier hergestellt. Das auf diese Weise erhaltene saugfähige Papier ist rotstichig gelb gefärbt. Das Abwasser ist praktisch farblos.

### Anwendungsvorschrift B

0,5 Teile des Farbstoffpulvers aus Beispiel 1 werden in 100 Teilen heissem Wasser gelöst und auf Raumtemperatur abgekühlt. Die Lösung gibt man zu 100 Teilen chemisch gebleichter Sulfitcellulose, die mit 2000 Teilen Wasser in einem Holländer gemahlen wurde. Nach 15 Minuten Durchmischung wird auf übliche Art mit Harzleim und Aluminiumsulfat geleimt. Papier, das aus diesem Material hergestellt wird, zeigt einen rotstichig gelben Farbton und besitzt gute Abwasser- und Nassechtheiten sowie gute Lichtechtheit.

### Anwendungsvorschrift C

Eine saugfähige Papierbahn aus ungeleimtem Papier wird bei 40-50° durch eine Farbstofflösung folgender Zusammensetzung gezogen:
0,5 Teile des Farbstoffs aus Beispiel 1
0,5 Teile Stärke und
99,0 Teile Wasser.

Die überschüssige Farbstofflösung wird durch zwei Walzen abgepresst. Die getrocknete Papierbahn ist rotstichig gelb gefärbt.
Auf analoge Weise wie in den Vorschriften A bis C angeführt kann auch mit den Farbstoffen der Beispiele 2-10 oder mit einer Färbepräparation davon gefärbt werden. Die erhaltenen Papierfärbungen sind gelb gefärbt und haben ein gutes Echtheitsniveau.

### Anwendungsvorschrift D

Man mischt 50 Teile gebleichten Nadelholz-Sulfitzellstoff und 50 Teile gebleichten Buchenzellstoff (Mahlgrad 30°SR*⁾) und 0,5 Teile des Farbstoffs aus Beispiel 1 in Wasser (pH 4, Wasserhärte 10°dH). Nach 16 Minuten erfolgt die Blattbildung. Das Papier ist in intensiv rotstichig gelber Nuance gefärbt. Eine Färbung bei pH 7 zeigt demgegenüber keine Stärke- oder Nuancenabweichung.
Der Ausziehgrad erreicht 100% und das Abwasser ist farblos.
*⁾ °SR = Grad Schopper Riegler

### Anwendungsvorschrift E

100 Teile zwischengetrocknetes Chromveloursleder werden in einer Flotte aus 400 Teilen Wasser, 2 Teilen 25%iger Ammoniumhydroxidlösung und 0,2 Teilen eines handelsüblichen Netzmittels während einer Stunde bei 50° im Fass gewalkt. Anschliessend wird die Flotte abgelassen. Dem gewalkten, noch feuchten Chromveloursleder werden 400 Teile Wasser von 60° sowie 1 Teil 25%ige Ammoniumhydroxidlösung zugefügt. Nach dem Zusatz von 5 Teilen des Farbstoffes aus Beispiel 1, gelöst in 200 Teilen Wasser, wird 90 Minuten bei 60° gefärbt. Anschliessend werden langsam 50 Teile 8%ige Ameisensäure zugesetzt, um den pH sauer zu stellen. Die Behandlung wird dann noch während weiterer 30 Minuten fortgesetzt. Abschliessend wird das Leder gespült, getrocknet und auf übliche Weise zugerichtet. Die erhaltene gelbe Lederfärbung ist egal gefärbt.
Gemäss analoger Methode wie in der Anwendungsvorschrift E beschrieben können auch die Farbstoffe der Beispiele 2-10 für das Färben von Leder eingesetzt werden.

### Anwendungsvorschrift F

Zu einer Färbeflotte, bestehend aus 3000 Teilen enthärtetem Wasser, 2 Teilen Soda und 1 Teil des Farbstoffes aus Beispiel 1, werden bei 30° 100 Teile vorgenetztes Baumwollgewebe gegeben. Nach Zusatz von 10 Teilen Glaubersalz wird die Flotte innerhalb von 30 Minuten auf Siedetemperatur erhitzt, wobei während dieses Aufheizvorganges auf den Temperaturstufen 50° und 70° jeweils weitere 10 Teile Glaubersalz zugefügt werden. Das Färben wird dann noch weitere 15 Minuten bei Siedetemperatur fortgesetzt, abschliessend werden 10 Teile Glaubersalz zugegeben. Man lässt das Färbebad dann abkühlen. Bei 50° wird das gefärbte Gewebe aus der Flotte entfernt, mit Wasser gespült und bei 60° getrocknet. Man erhält eine rotstichig gelbe Baumwollfärbung von guten Echtheiten.
In ähnlicher Weise wie in der Anwendungsvorschrift F beschrieben können auch die Farbstoffe der Beispiele 2-10 für das Färben von Baumwolle Verwendung finden.

## Patentansprüche (Patentansprüche für folgende(n) Vertragsstaat(en): DE, NL, SE)

1. Verbindungen der Formel I, 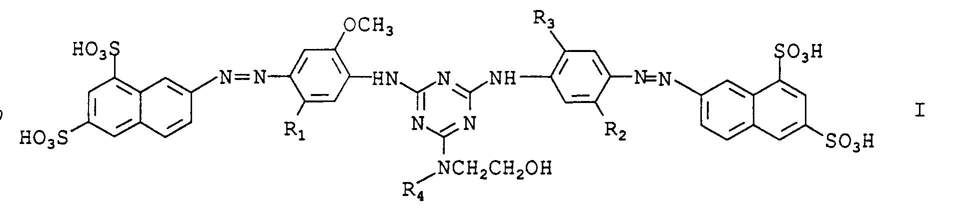 worin
R₁ und R₂ unabhängig voneinander für Wasserstoff oder Methyl und
R₃ für Wasserstoff, Methyl oder Methoxy stehen,
mit der Einschränkung, dass R₁ und R₂ voneinander verschieden sind, wenn R₃ für Methoxy steht, und
R₄ Wasserstoff oder 2-Hydroxyäthyl bedeutet,
und deren Salze.

2. Verbindungen nach Anspruch 1, worin R₁ für Methyl, R₂ für Wasserstoff und R₃ für Methoxy stehen.

3. Verfahren zur Herstellung von Verbindungen der Formel I, definiert in Anspruch 1, dadurch gekennzeichnet, dass man eine Verbindung der Formel II, 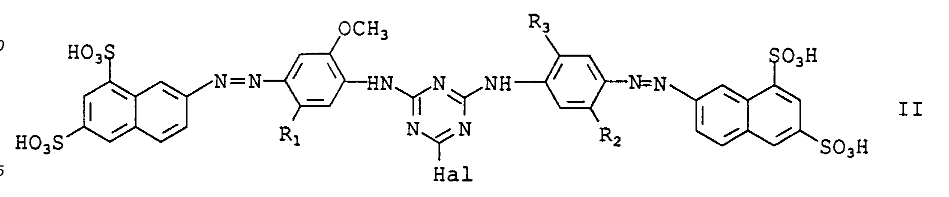 worin R₁, R₂ und R₃ wie in Anspruch 1 definiert sind und Hal für Halogen steht,
mit dem Amin der Formel III, 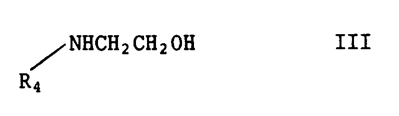 worin R₄ Wasserstoff oder 2-Hydroxyäthyl bedeutet,
umsetzt.

4. Lagerstabile, flüssig-wässrige Farbstoffpräparation enthaltend eine Verbindung der Formel I, definiert in Anspruch 1, in wasserlöslicher Salzform.

5. Wasserlösliche feste, gegebenenfalls granulierte Farbstoffpräparation enthaltend eine Verbindung der Formel I, definiert in Anspruch 1, in wasserlöslicher Salzform.

6. Verfahren zum Färben oder Bedrucken von hydroxygruppen- oder stickstoffhaltigen organischen Substraten, dadurch gekennzeichnet, dass man mit einer Verbindung der Formel I, definiert in Anspruch 1, in wasserlöslicher Salzform oder mit einer Präparation gemäss Anspruch 4 oder 5 färbt oder bedruckt.

7. Verfahren zum Färben oder Bedrucken nach Anspruch 6, bei welchem als Substrat Papier, Leder oder Textilmaterial, das aus natürlichen oder synthetischen Polyamiden oder aus natürlicher oder regenerierter Cellulose besteht oder enthält, eingesetzt wird.

8. Verfahren zur Herstellung von Tinten, dadurch gekennzeichnet, dass man dazu eine Verbindung der Formel I, definiert in Anspruch 1, einsetzt.

## Patentansprüche (Patentansprüche für folgende(n) Vertragsstaat(en): ES)

1. Verfahren zur Herstellung von Verbindungen der Formel I, 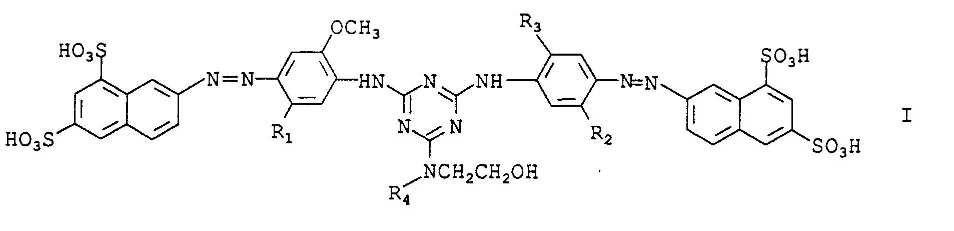 worin
R₁ und R₂ unabhängig voneinander für Wasserstoff oder Methyl und
R₃ für Wasserstoff, Methyl oder Methoxy stehen,
mit der Einschränkung, dass R₁ und R₂ voneinander verschieden sind, wenn R₃ für Methoxy steht, und
R₄ Wasserstoff oder 2-Hydroxyäthyl bedeutet,
und deren Salzen, dadurch gekennzeichnet, dass man eine Verbindung der Formel II, 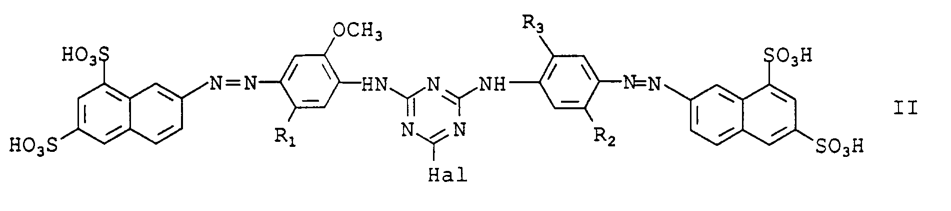 worin R₁, R₂ und R₃ wie oben definiert sind und Hal für Halogen steht, mit dem Amin der Formel III, 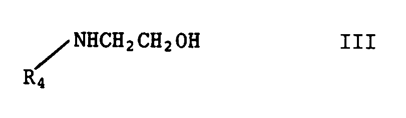 worin R₄ wie oben definiert ist, umsetzt.

2. Verfahren nach Anspruch 1 zur Herstellung von Verbindungen der Formel I, worin R₁ für Methyl, R₂ für Wasserstoff und R₃ für Methoxy stehen.

3. Verfahren zum Färben oder Bedrucken von hydroxygruppen- oder stickstoffhaltigen organischen Substraten, dadurch gekennzeichnet, dass man mit einer gemäss dem Verfahren nach Anspruch 1 hergestellten Verbindung der Formel I, in wasserlöslicher Salzform, färbt oder bedruckt.

4. Verfahren zum Färben oder Bedrucken nach Anspruch 3, bei welchem als Substrat Papier, Leder oder Textilmaterial, das aus natürlichen oder synthetischen Polyamiden oder aus natürlicher oder regenerierter Cellulose besteht oder enthält, eingesetzt wird.

5. Verfahren zur Herstellung von Tinten, dadurch gekennzeichnet, dass man dazu eine gemäss dem Verfahren nach Anspruch 1 hergestellte Verbindung der Formel I einsetzt.

## Claims (Claims for the following Contracting State(s): DE, NL, SE)

1. Compounds of formula I 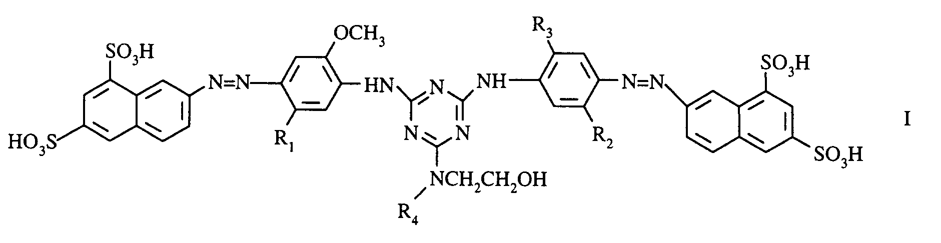 wherein
R₁ and R₂ independently signify hydrogen or methyl and
R₃ signifies hydrogen, methyl or methoxy,
with the proviso that R₁ and R₂ are different from each other when R₃ signifies methoxy, and
R₄ signifies hydrogen or 2-hydroxyethyl,
and salts thereof.

2. Compounds according to claim 1, wherein R₁ signifies methyl, R₂ hydrogen and R₃ methoxy.

3. A process for the production of compounds of formula I, as defined in claim 1, characterized in that a compound of formula II 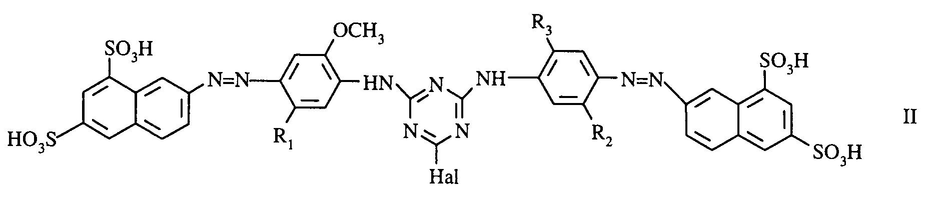 wherein R₁, R₂ and R₃ are defined as in claim 1 and Hal signifies halogen,
is reacted with the amine of formula III 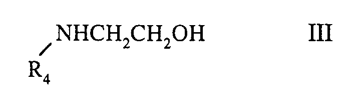 wherein R₄ signifies hydrogen or 2-hydroxyethyl.

4. A storage-stable, liquid, aqueous dyestuff preparation containing a compound of formula I, as defined in claim 1, in water-soluble salt form.

5. A water-soluble solid, optionally granular, dyestuff preparation containing a compound of formula I, as defined in claim 1, in water-soluble salt form.

6. A process for dyeing or printing hydroxy- or nitrogen-containing organic substrates, characterized in that a compound of formula I, as defined in claim 1, in water-soluble salt form or a preparation according to claim 4 or 5 is used for dyeing or printing.

7. A process for dyeing or printing according to claim 6, wherein paper, leather or textile material consisting of or containing natural or synthetic polyamides or natural or regenerated cellulose is used as a substrate.

8. A process for the preparation of inks, characterized in that a compound of formula I, as defined in claim 1, is used.

## Claims (Claims for the following Contracting State(s): ES)

1. A process for the production of compounds of formula I 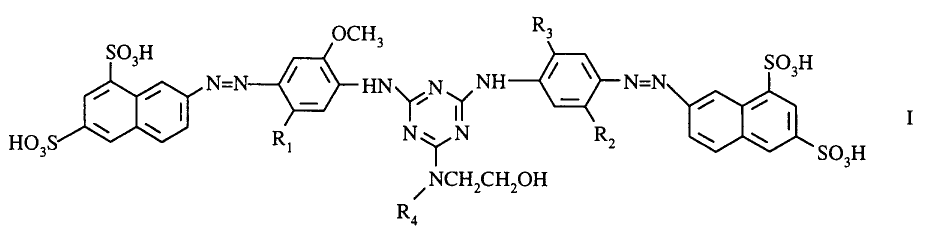 wherein
R₁ and R₂ independently signify hydrogen or methyl and
R₃ signifies hydrogen, methyl or methoxy,
with the proviso that R₁ and R₂ are different from each other when R₃ signifies methoxy, and
R₄ signifies hydrogen or 2-hydroxyethyl,
and salts thereof, characterized in that a compound of formula II 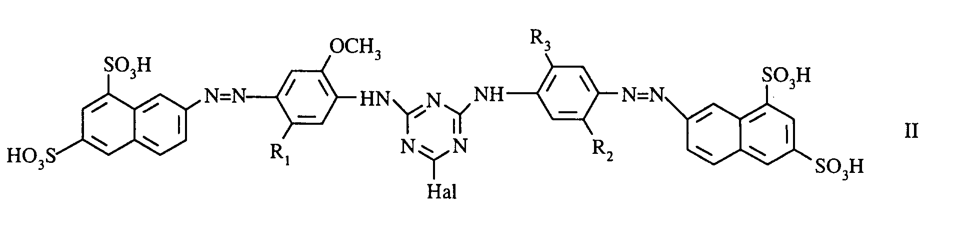 wherein R₁, R₂ and R₃ are defined as above and Hal signifies halogen,
is reacted with the amine of formula III 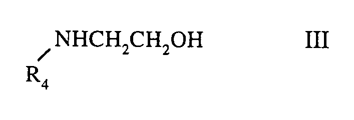 wherein R₄ signifies hydrogen or 2-hydroxyethyl.

2. A process according to claim 1 for the production of compounds of formula 1, wherein R₁ signifies methyl, R₂ hydrogen and R₃ methoxy.

3. A process for dyeing or printing hydroxy- or nitrogen-containing organic substrates, characterized in that a compound of formula I, obtained by the process as defined in claim 1, in water-soluble salt form is used for dyeing or printing.

4. A process for dyeing or printing according to claim 3, wherein paper, leather or textile material consisting of or containing natural or synthetic polyamides or natural or regenerated cellulose is used as a substrate.

5. A process for the preparation of inks, characterized in that a compound of formula I, obtained by a process as defined in claim 1, is used.

## Revendications (Revendications pour l'(les) Etat(s) contractant(s) suivant(s): DE, NL, SE)

1. Les composés de formule I 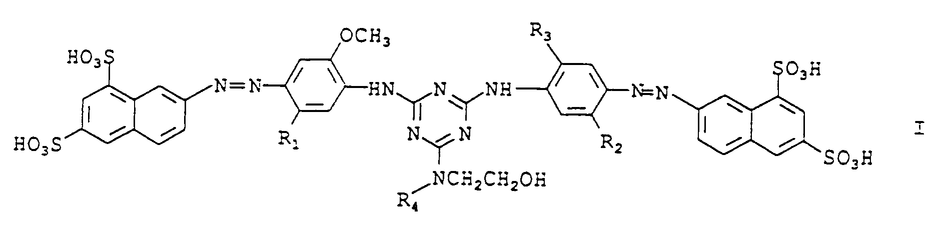 dans laquelle
R₁ et R₂ signifient indépendamment l'un de l'autre, l'hydrogène ou un groupe méthyle, et
R₃ signifie l'hydrogène ou un groupe méthyle ou méthoxy,
R₁ et R₂ devant avoir une signification différente, lorsque R₃ signifie un groupe méthoxy, et
R₄ signifie l'hydrogène ou un groupe 2-hydroxyéthyle,
et les sels de ces composés.

2. Les composés selon la revendication 1, où R₁ signifie un groupe méthyle, R₂ signifie l'hydrogène et R₃ signifie un groupe méthoxy.

3. Un procédé de préparation des composés de formule I tels que définis à la revendication 1, caractérisé en ce qu'on fait réagir un composé de formule II 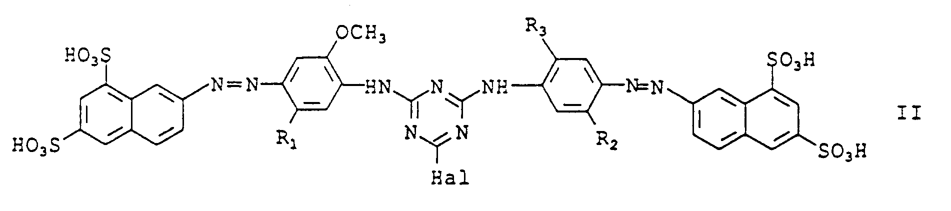 dans laquelle R₁, R₂ et R₃ sont tels que définis à la revendication 1 et Hal signifie un halogène,
avec une amine de formule III 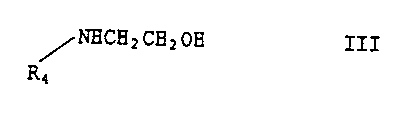 où R₄ signifie l'hydrogène ou un groupe 2-hydroxyéthyle.

4. Une préparation tinctoriale aqueuse, liquide et stable au stockage comprenant un composé de formule I tel que défini à la revendication 1, sous forme d'un sel hydrosoluble.

5. Une préparation tinctoriale solide et hydrosoluble, éventuellement sous forme de granulés, comprenant un composé de formule I tel que défini à la revendication 1, sous forme d'un sel hydrosoluble.

6. Un procédé de teinture ou d'impression de substrats organiques contenant des groupes hydroxy ou de l'azote, caractérisé en ce qu'on teint ou on imprime avec un composé de formule I, tel que défini à la revendication 1, sous forme d'un sel hydrosoluble ou avec une préparation selon la revendication 4 ou 5.

7. Un procédé de teinture ou d'impression selon la revendication 6, dans lequel on utilise, comme substrat, du papier, du cuir ou des matières textiles qui sont constituées, en totalité ou en partie de polyamides naturels ou synthétiques ou de cellulose naturelle ou régénérée.

8. Un procédé de préparation d'encres, caractérisé en ce qu'on utilise un composé de formule I tel que défini à la revendication 1.

## Revendications (Revendications pour l'(les) Etat(s) contractant(s) suivant(s): ES)

1. Un procédé de préparation des composés de formule I 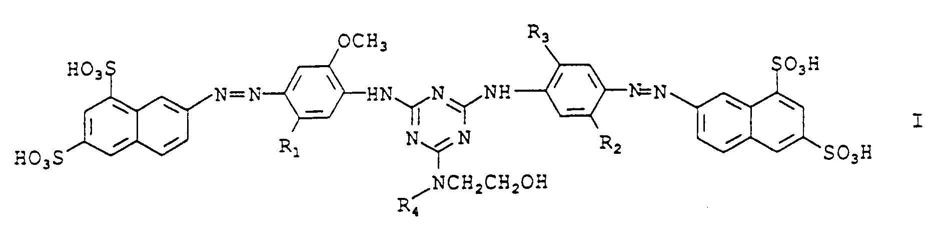 dans laquelle
R₁ et R₂ signifient indépendamment l'un de l'autre, l'hydrogène ou un groupe méthyle, et
R₃ signifie l'hydrogène ou un groupe méthyle ou méthoxy,
R₁ et R₂ devant avoir une signification différente, lorsque R₃ signifie un groupe méthoxy, et
R₄ signifie l'hydrogène ou un groupe 2-hydroxyéthyle,
et les sels de ces composés, caractérisé en ce qu'on fait réagir un composé de formule II 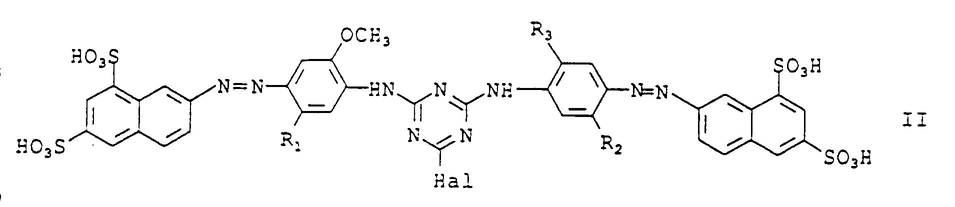 dans laquelle R₁, R₂ et R₃ sont tels que définis plus haut et Hal signifie un halogène,
avec une amine de formule III 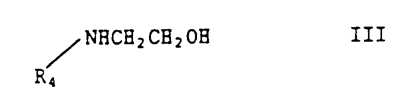 où R₄ est tel que défini plus haut.

2. Un procédé selon la revendication 1 pour la préparation des composés de formule I où R₁ signifie un groupe méthyle, R₂ signifie l'hydrogène et R₃ signifie un groupe méthoxy.

3. Un procédé de teinture ou d'impression de substrats organiques contenant des groupes hydroxy ou de l'azote, caractérisé en ce qu'on teint ou on imprime avec un composé de formule I préparé selon le procédé défini à la revendication 1, sous forme d'un sel hydrosoluble.

4. Un procédé de teinture ou d'impression selon la revendication 3, dans lequel on utilise comme substrat du papier, du cuir ou des matières textiles qui sont constituées en totalité ou en partie de polyamides naturels ou synthétiques ou de cellulose naturelle ou régénérée.

5. Un procédé de préparation d'encres, caractérisé en ce qu'on utilise un composé de formule I préparé selon le procédé défini à la revendication 1.
